(19) Europäisches Patentamt
European Patent Office
Office européen des brevets

(11) Publication number : 0 199 702 B1

(12) # EUROPEAN PATENT SPECIFICATION

(45) Date of publication of patent specification : 21.12.88

(51) Int. Cl.⁴ : C 07 C 99/00, C 07 C101/00, C 07 F 9/38

(21) Application number : 86870047.7

(22) Date of filing : 21.04.86

(54) **Amine dealkylation process.**

(30) Priority : 22.04.85 US 725856

(43) Date of publication of application : 29.10.86 Bulletin 86/44

(45) Publication of the grant of the patent : 21.12.88 Bulletin 88/51

(84) Designated contracting states : AT BE CH DE FR GB IT LI LU NL SE

(56) References cited :
CH-A- 395 129
METHODEN DER ORGANISCHEN CHEMIE (HOUBEN-WEYL), 4th edition, vol. XI/1: "Stickstoffverbindungen II", 1957, GEORG THIEME VERLAG, STUTTGART

(73) Proprietor : Monsanto Company
Patent Department 800 North Lindbergh Boulevard
St. Louis Missouri 63167 (US)

(72) Inventor : Miller, William Harold
1000 Nancy Carol Lane
Glendale Missouri 63122 (US)
Inventor : Balthazor, Terry Mack
7208 Chamberlain Avenue
St. Louis Missouri 63130 (US)

(74) Representative : Lunt, John Cooper et al
Monsanto Europe S.A. Patent Department Avenue de Tervuren 270-272 Letter Box No 1
B-1150 Brussels (BE)

EP 0 199 702 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a process for dealkylating a substituted amine and is useful in the preparation of a wide variety of amine-containing chemicals.

In the synthesis of many useful chemical compounds comprising amine groups it is sometimes necessary to protect the amine group from reaction with another functional group in the molecule, or from reaction with a chemical effecting modification of another part of the molecule. This can often be done by preparing a derivative of the amine group from which the original amine group may readily be regenerated. Protection of an amine group in this way has in the past been done by formation of carbamates, amides, imines, enamines and N-hetero atom derivatives.

Another method of amine group protection that is particularly relevant to the present invention is the use of an alkyl group. However the essence of protection is that the group can be readily removed. Aralkyl groups with the aryl group α to the nitrogen can be removed by reductive processes. For example, CH-A-395 129 describes a process in which an N-benzyl-N-methylamino-carboxylic acid is subjected to hydrogenolysis to split oft the N-benzyl group. However, it has been the view that alkyl groups need to contain another functional group to facilitate cleavage of the N-C bond. This subject is fully discussed in « Protective Groups in Organic Synthesis » by T. W. Greene (Wiley & Sons, 1981). Amino group protection is discussed in Chapter 7.

Protection of a primary or secondary amine group using an alkyl group is usually very effective since the alkyl group is, generally speaking, quite inactive in most organic reactions. It is also however quite difficult to remove for essentially the same reason.

Dealkylation of quaternary ammonium salts with alkalis is described in « Methoden der organischen Chemie (Houben-Weyl), vierte Auflage, Band XI/I, « Stickstoffverbindungen II », (1957), page 966. For example, it is said that aromatic quaternary ammonium salts are converted to tertiary amines by boiling with an absolute alcoholic solution of sodium alcoholate, and the quaternary ammonium salts formed from aniline, p-toluidine, p-chloroaniline and similar aromatic amines by methylation can be converted to pure dimethylarylamines by making their aqueous solutions strongly alkaline with sodium hydroxide and then distilling with steam.

A process has now been discovered by which substituted or unsubstituted alkyl groups can be removed from secondary or tertiary amines to yield the corresponding primary or secondary amine respectively.

Of course the dealkylation process of the present invention is useful not only in the context of the removal of an alkyl amine-protecting group but also in the synthesis of selected primary or secondary amines in which the precursor compound is one containing an alkyl-substituted amine group.

Description of the invention

The present invention provides a dealkylation process for the production of primary or secondary amines which comprises reacting, at a temperature from 250 °C to 400 °C, an amine having the formula :

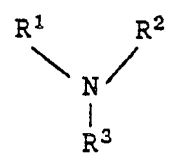

wherein $R^1$ is selected from groups containing an acid function promoting solubility of the amine in aqueous alkaline solution and containing at least one acidic —OH group ; $R^2$ is hydrogen, methyl, benzyl, $R^1$ or $R^3$, provided that if either of $R^1$ and $R^2$ is $—CH_2COOH$ the other may not be $—CH_2PO_3H_2$ ; and $R^3$ is selected from groups having the formula :

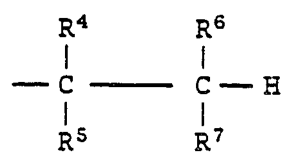

wherein $R^4$, $R^5$ are each individually hydrogen, $C_1$-$C_6$ alkyl, or aryl ; $R^6$ and $R^7$ are, independently selected from, $R^4$, $R^5$, hydroxy, $C_1$-$C_6$ alkoxy, aryloxy, halogen, —SH, $C_1$-$C_6$ thioalkyl, $—NHR^8$, and $—NR^8_2$ (where each $R^8$ is a $C_1$ to $C_6$ alkyl group) or, where $R^6$ is H, $R^7$ can be a group with the formula : $—N—(CH_2COOH)_2$ ; or $R^3$ and $R^2$ together with the nitrogen can form a heterocyclic group ;
with an alkali in aqueous solution in at least the stoichiometric amount of alkali needed to neutralize any acid groups present in the amine, so as to produce a compound in which the $R^3$ group has been replaced by hydrogen.

The reaction according to the invention can be represented diagrammatically as follows :

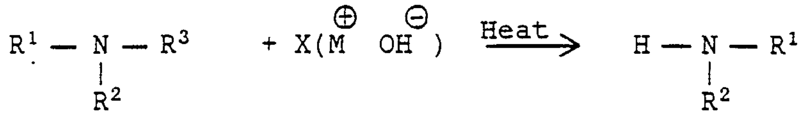


where M is an alkali metal and X is at least the number of free acid groups in the amine so as to ensure that the reaction occurs in alkaline solution. Usually from 1 to 6 moles of alkali for each acidic group in the amine are used. In preferred reactions this ratio is from 3 : 2 to 3 : 1.

The group $R^3$ is essentially an alkyl group containing at least one hydrogen on the β carbon atom. The group may, if desired, be substituted by the various groups specified above. These are groups that do not interfere with, or generate competing reactions to, the dealkylation process of the invention. The group split off ($R^3$) is usually released in the form of an alkene. In the case of the simplest $R^3$ groups such as ethyl, propyl and isopropyl, the alkenes formed are gases, and thus cause no separation problems during product isolation.

Since the reaction takes place in aqueous solution it is essential that at least one of the groups $R^1$ or $R^2$ in the reaction material provides acidic —OH groups that either themselves render the amine water soluble or produce a water soluble derivative in the presence of the alkali reactant. Suitable groups that can be represented by $R^1$ include for example :

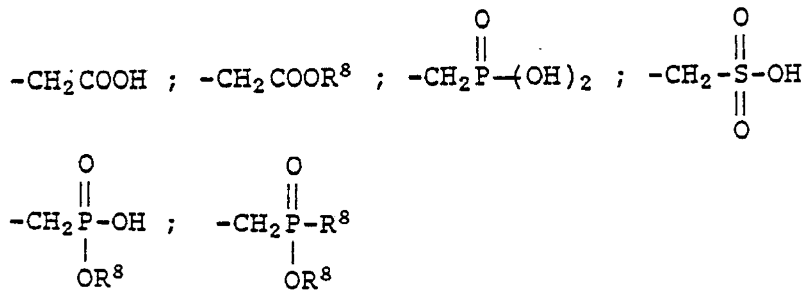

The reaction temperature is between 250 °C and 400 °C and since the reaction occurs in aqueous solution this implies that the reaction occurs in an autoclave capable of withstanding the autogenous pressures generated by the aqueous reaction mixtures at these temperatures.

The alkali most commonly used is sodium hydroxide but the readily available potassium hydroxide can also be used if desired. The other alkali metal hydroxides can be used but are not generally preferred either because of cost or general effectiveness.

## Specific description of preferred embodiments

The process of the invention is particularly useful for the preparation of amino acids from their N-alkyl derivatives. Particularly valuable amino acids (because of their utility as intermediates in the production of a range of agricultural and pharmaceutical chemicals) include glycine, sarcosine and iminodiacetic acid (IDA).

The following chart gives the results of a number of reactions according to the invention resulting in the production of the amino acid indicated. In each case the reaction temperature was 300 °C and the alkali was sodium hydroxide. The reactions are generically represented by the formula :

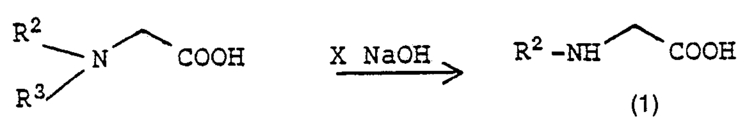


(1)

| $R^2$ | $R^3$ | X NaOH | Time | % Yield |
|---|---|---|---|---|
| $CH_3-$ | $(CH_3)_2CH-$ | 2 | 6H | 50-70 |
| H- | $(CH_3)_2CH-$ | 2 | 6H | 8 |
| $HO_2CCH_2-$ | $HOCH_2CH_2-$ | 3 | 3H | 80 |
| $HO_2CCH_2-$ | $(CH_3)_2CH-$ | 3 | 3H | 64 |
| $HO_2CCH_2-$ | $(HO_2CCH_2)_2NCH_2CH_2-$ | 5 | 3H | 22 |

Another useful class of amines contains a phosphonic acid group such as aminomethylphosphonic acid (AMPA) and its derivatives. The following chart shows the production of AMPA using the process of the invention applied to various N-alkyl derivatives in the following reaction :

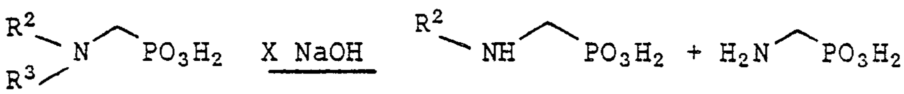


(2) (3)

| $R^2$ | $R^3$ | X NaOH | Time | °C | %(2) | %(3) |
|---|---|---|---|---|---|---|
| H- | $(CH_3)_2CH-$ | 3 | 3H | 300 | 68 | 25 |
| $(CH_3)_2CH-$ | $(CH_3)_2CH-$ | 5 | 5H | 325 | 29 | 61 |
| $(CH_3)_2CH-$ | $(CH_3)_2CH-$ | 5 | 0.5H | 325 | 91 | 8 |
| $CH_3CH_2-$ | $CH_3CH_2-$ | 5 | 5H | 325 | 2 | 77 |
| $CH_3CH_2-$ | $CH_3CH_2-$ | 10 | 5H | 325 | 12 | 70 |
| $CH_3CH_2-$ | $CH_3CH_2-$ | 4 | 10H | 325 | 2 | 72 |
| $CH_3CH_2-$ | $CH_3CH_2-$ | 3 | 5H | 325 | 39 | 52 |

Substrate ($R^2$ + $R^3$)

| | | | | | | |
|---|---|---|---|---|---|---|
| 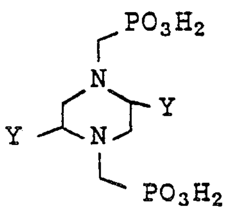 | Y=H | 12 | 7H | 300 | - | 18 |
| | $Y=CH_3$ | 12 | 7H | 300 | - | 42 |
| 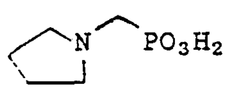 | | 5 | 5H | 325 | - | 37 |

It is observed that where more than one alkyl group is to be removed better results are obtained by increasing the stoichiometric excess of base and increasing the overall dilution factor of the reaction mixture. In any event the second elimination is notably slower than the first.

The following are specific detailed Examples of the process of the invention. It is not however intended that the following Examples imply any limitation on the essential scope of the invention.

## Example 1

A 100 ml Monel autoclave was charged with 5.0 g (0.038 mol) of N-isopropyl-N-methylglycine, 6.0 g (0.076 mol) of 50 % NaOH solution, and 9 ml of water to give a solution. The vessel was closed and the head space flushed for several minutes with $N_2$. The reactor was then sealed and heated to 300 °C over a one hour period. As a consequence of this temperature, an internal pressure of $6.1 \times 10^6$ $N/M^2$ had developed. While the reaction temperature was maintained at 300 °C for six hours, the pressure rose to $7.0 \times 10^6$ $N/M^2$ as a consequence of propene being liberated (confirmation of propene was obtained by mass spectral analysis of the head space gases). After the heating period, the reactor was cooled, excess pressure was released, and the reaction mixture was diluted with water. An analytical sample was examined by HPLC which determined the yield of sarcosine to be 2.38 g (71 %). The reaction mixture was neutralized by addition of 6.3 ml of concentrated HCl and purified by ion-exchange chromatography (Amberlite CG-50 resin) to yield 51 % of the theoretical amount of sarcosine.

## Example 2

A 100 ml Monel autoclave was charged with 4.27 g (24.4 mmol) of N-isopropyliminodiacetic acid, 5.8 g (73 mmol) of a 50 % NaOH solution, and 12 ml of water to give a solution. The reactor was closed and the head space was flushed with $N_2$ before sealing the vessel and heating it to 300 °C. When the vessel

reached 300 °C, an internal pressure of $5.82 \times 10^6$ N/M$^2$ had developed. During the three hour heating time at 300 °C the pressure rose to $6.31 \times 10^6$ N/M$^2$. When the reactor cooled, excess pressure was vented and the reaction mixture was neutralized with 73 mmol of HCl. A solution of the final product was analyzed by HPLC and was determined to contain 2.07 g (64 %) of iminodiacetic acid and 0.66 g (16 %) of the starting substrate.

Example 3

A 100 ml Monel autoclave was charged with 7.15 g (40.3 mmol) of N-(2-hydroxyethyl)iminodiacetic acid, 9.6 g (121 mmol) of a 50 % NaOH solution, and 12 ml of water to give a solution. The head space of the reactor was flushed with $N_2$, sealed, and then the vessel was heated to 300 °C. When the reactor reached this temperature an internal pressure of $5.82 \times 10^6$ N/M$^2$ had developed. During the course of heating at 300 °C for three hours, the pressure rose to $7.55 \times 10^6$ N/M$^2$. The reactor was allowed to cool, excess pressure was released, and the reaction mixture was diluted with 10 ml of water. The reaction was neutralized by the addition of 10 ml of concentrated HCl. HPLC of the final solution indicated a total of 4.31 g (80.4 %) of iminodiacetic acid had been prepared.

Example 4

To a 100 ml Monel autoclave was added 2.71 g (16.2 mmol) of N,N-diethylaminomethylphosphonic acid 6.45 g (81 mmol) of a 50 % NaOH solution, and 10 ml of water to give a solution. The head space of the reactor was flushed with $N_2$ for several minutes. The reactor was then sealed and heated to 325 °C over the course of an hour. At this temperature an internal pressure of $4.65 \times 10^6$ N/M$^2$ had developed. The reaction was maintained at 300 °C for five hours during which time the pressure in the vessel increased to approximately $7.69 \times 10^6$ N/M$^2$. After cooling the vessel and releasing excess pressure, the reaction mixture was diluted with 10 ml of water, neutralized with 6.6 ml of concentrated HCl, and evaporated to dryness. This residue was taken up in concentrated HCl and NaCl was filtered off. The filtrate was evaporated to leave an oil which was purified by ion-exchange chromatography (Dowex 50 × 8-400). Only one major peak was isolated (1.43 g). By NMR this was determined to consist of 1.38 g (76.6 %) of aminomethylphosphonic acid and 0.05 g (2.2 %) of N-ethylaminomethylphosphonic acid.

Example 5

To a 100 ml Monel autoclave was added 3.16 g (16.2 mmol) of N,N-diisopropylaminomethylphosphonic acid, 6.48 g (81 mmol) of a 50 % NaOH solution, and 10 ml of water to give a solution. The head space of the vessel was flushed with $N_2$ for several minutes and then the reactor was sealed. The vessel was heated to 325 °C over the course of 50 minutes and held at that temperature for only 25 additional minutes. During the period at 325 °C the internal pressure of the reactor rose from $6.58 \times 10^6$ to $6.80 \times 10^6$ N/M$^2$. The system was allowed to cool, excess pressure was released, and the reaction mixture was diluted with water. The solution was neutralized with 6.7 ml of concentrated HCl and evaporated to dryness. The residue was taken up in concentrated HCl and NaCl was filtered off. The filtrate was evaporated to an oil and purified by ion-exchange chromatography (Dowex 50 × 8-400) to give only one major peak (2.4 g). By NMR this material was determined to consist of 2.25 g (90.6 %) of N-isopropyl-aminomethylphosphonic acid and 0.15 g (8.4 %) of aminomethylphosphonic acid.

The amino acids produced by the process of the invention are useful intermediates in the production of a wide range of chemicals with therapeutic or phytotoxic applications.

For example both iminodiacetic acid and aminomethylphosphonic acid can each be used as a starting material (in different processes of course) for the production of N-phosphonomethylglycine, the active ingredient in an extremely effective systemic contact herbicide.

**Claims**

1. A dealkylation process for the production of primary and secondary amines which comprises reacting, at a temperature of from 250 °C to 400 °C, an amine having the formula :

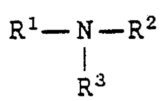

wherein $R^1$ is selected from groups containing an acidic function promoting solubility of the amine in aqueous alkaline solution and containing at least one acidic —OH group ; $R^2$ is hydrogen, methyl, benzyl, $R^1$ or $R^3$, provided that if either of $R^1$ and $R^2$ is $—CH_2COOH$ the other may not be $—CH_2PO_3H_2$ ; and $R^3$ is selected from groups having the formula :

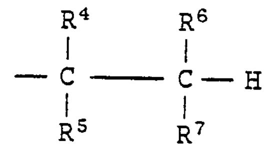

wherein $R^4$ and $R^5$ are each individually hydrogen, $C_1$-$C_6$ alkyl or aryl ; $R^6$ and $R^7$ are independently selected from $R^4$, $R^5$, hydroxy, $C_1$-$C_6$ alkoxy, aryloxy, halogen, —SH, $C_1$-$C_6$ thioalkyl, —$NHR^8$, $NR^8_2$ (where $R^8$ is a $C_1$-$C_6$ alkyl group) or, where $R^6$ is H, $R^7$ can be a group with the formula : —N $(CH_2COOH)_2$ ; or $R^3$ and $R^2$ together with the nitrogen can form a heterocylic group ;
with an aqueous alkali in at least the stoichiometric amount of alkali needed to neutralize the acidic —OH groups, so as to produce a compound in which the group $R^3$ has been replaced by hydrogen.

2. A process according to Claim 1 in which the alkali is sodium hydroxide.

3. A process according to Claim 2 in which the ratio of moles of alkali per acidic group in the amine is from 1 : 1 to 6 : 1.

4. A process according to Claim 1 in which the temperature is from 300 °C-400 °C.

5. A process according to Claim 1 in which $R^3$ is a $C_2$-$C_6$ alkyl group.

6. A process according to Claim 1 in which $R^1$ is selected from —$CH_2COOH$ and —$CH_2PO_3H_2$.

7. A process according to Claim 6 in which $R^1$ is —$CH_2PO_3H_2$ and $R^2$ is $R^3$ or H.

8. A process according to Claim 6 in which $R^1$ is —$CH_2COOH$ and $R^2$ is $R^3$ or H.

9. A process according to Claim 6 in which $R^3$ is a $C_2$-$C_6$ alkyl group and amine is heated at 300 °C to 400 °C in the presence of aqueous sodium hydroxide.

**Patentansprüche**

1. Dealkylierungsverfahren zur Herstellung von primären und sekundären Aminen, welches das Umsetzen eines Amins der Formel

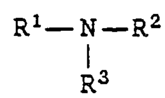

worin $R^1$ ausgewählt ist aus Gruppen, die eine die Löslichkeit des Amins in wässeriger alkalischer Lösung fördernde saure Funktion aufweisen und mindestens eine saure —OH-Gruppe enthalten ; $R^2$ Wasserstoff, Methyl, Benzyl, $R^1$ oder $R^3$ bedeutet, mit der Maßgabe daß, wenn eines von $R^1$ und $R^2$ die Bedeutung —$CH_2COOH$ hat, das andere nicht —$CH_2PO_3H_2$ sein kann ; und $R^3$ ausgewählt ist aus Gruppen der Formel

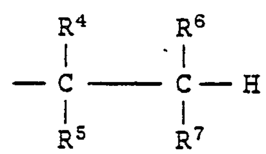

worin $R^4$ und $R^5$ jeweils Wasserstoff, $C_1$-$C_6$-Alkyl oder Aryl darstellen ; $R^6$ und $R^7$ unabhängig ausgewählt sind aus $R^4$, $R^5$, Hydroxy, $C_1$-$C_6$-Alkoxy, Aryloxy, Halogen, —SH, $C_1$-$C_6$-Thioalkyl, —$NHR^8$ und $NR^8_2$ (wobei $R^8$ eine $C_1$-$C_6$-Alkylgruppe bedeutet) oder, wenn $R^6$ die Bedeutung H hat, $R^7$ eine Gruppe der Formel —$N(CH_2COOH)_2$ sein kann ; oder $R^3$ und $R^2$ zusammen mit dem Stickstoff eine heterocyclische Gruppe bilden können ;
bei einer Temperatur von 250 bis 400 °C mit einem wässerigen Alkali in mindestens dem stöchiometrischen Anteil des Alkalis, der zum Neutralisieren der sauren —OH-Gruppen erforderlich ist, um eine Verbindung herzustellen, in der die Gruppe $R^3$ durch Wasserstoff ersetzt wurde, umfaßt.

2. Verfahren nach Anspruch 1, worin das Alkali Natriumhydroxid ist.

3. Verfahren nach Anspruch 2, worin das Molverhältnis von Alkali pro saurer Gruppe im Amin 1 : 1 bis 6 : 1 beträgt.

4. Verfahren nach Anspruch 1, worin die Temperatur 300 bis 400 °C beträgt.

5. Verfahren nach Anspruch 1, worin $R^3$ eine $C_2$-$C_6$-Alkylgruppe ist.

6. Verfahren nach Anspruch 1, worin $R^1$ ausgewählt ist aus —$CH_2COOH$ und —$CH_2PO_3H_2$.

7. Verfahren nach Anspruch 6, worin $R^1$ —$CH_2PO_3H_2$ ist und $R^2$ die Bedeutung $R^3$ oder H hat.

8. Verfahren nach Anspruch 6, worin $R^1$ —$CH_2COOH$ ist und $R^2$ die Bedeutung $R^3$ oder H hat.

9. Verfahren nach Anspruch 6, worin $R^3$ eine $C_2$-$C_6$-Alkylgruppe ist und das Amin in Anwesenheit von wässerigem Natriumhydroxid auf 300 bis 400 °C erhitzt wird.

**Revendications**

1. Procédé de désalcoylation pour la production d'amines primaires et secondaires qui comprend la mise en réaction, à une température comprise entre 250 °C et 400 °C, d'une amine ayant pour formule :

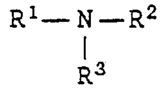

dans laquelle $R^1$ est choisi parmi des groupes contenant une fonction acide favorisant la solubilité de l'amine dans une solution alcaline aqueuse et contenant au moins un groupe acide —OH ; $R^2$ représente l'hydrogène, un groupe méthyle, un groupe benzyle, $R^1$ ou $R^3$, à condition que si l'un ou l'autre des groupes $R^1$ et $R^2$ représente —$CH_2COOH$, l'autre ne puisse pas représenter —$CH_2PO_3H_2$ et $R^3$ est choisi parmi des groupes ayant pour formule :

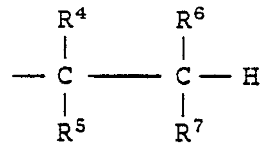

dans laquelle $R^4$ et $R^5$ représentent chacun indépendamment l'un de l'autre l'hydrogène, un groupe alkyle en $C_1$-$C_6$ ou aryle ; $R^6$ et $R^7$ sont indépendamment choisis parmi $R^4$, $R^5$, un groupe hydroxy, un groupe alcoxy en $C_1$-$C_6$, un groupe aryloxy, un groupe halogène, —SH, un groupe thioalkyle en $C_1$-$C_6$, —$NHR^8$, $NR^8_2$ (sachant que $R^8$ représente un groupe alkyle en $C_1$-$C_6$) ou, lorsque $R^6$ représente H, $R^7$ peut représenter un groupe ayant la formule : —N $(CH_2COOH)_2$ ; ou $R^3$ et $R^2$ pris ensemble avec l'atome d'azote peuvent former un groupe hétérocyclique ;
avec un alcali aqueux en au moins la quantité stoechiométrique d'alcali nécessaire pour neutraliser les groupes acides —OH de manière à produire un composé dans lequel le groupe $R^3$ a été remplacé par un groupe hydrogène.

2. Procédé selon la revendication 1, dans lequel l'alcali est l'hydroxyde de sodium.

3. Procédé selon la revendication 2, dans lequel le rapport des moles d'alcali par groupe acide dans l'amine est compris entre 1 : 1 et 6 : 1.

4. Procédé selon la revendication 1, dans lequel la température est comprise entre 300 °C et 400 °C.

5. Procédé selon la revendication 1, dans lequel $R^3$ représente un groupe alkyle en $C_2$-$C_6$.

6. Procédé selon la revendication 1, dans lequel $R^1$ est choisi parmi —$CH_2COOH$ et —$CH_2PO_3H_2$.

7. Procédé selon la revendication 6, dans lequel $R^1$ représente —$CH_2PO_3H_2$ et $R^2$ représente $R^3$ ou H.

8. Procédé selon la revendication 6, dans lequel $R^1$ représente —$CH_2COOH$ et $R^3$ représente $R^3$ ou H.

9. Procédé selon la revendication 6, dans lequel $R^3$ représente un groupe alkyle en $C_2$-$C_6$ et en ce qu'on chauffe l'amine entre 300 °C et 400 °C en présence d'hydroxyde de sodium aqueux.